Europäisches Patentamt

European Patent Office

Office européen des brevets

(19)

(11) Veröffentlichungsnummer: **0 177 635**
**A1**

(12) EUROPÄISCHE PATENTANMELDUNG

(21) Anmeldenummer: **84112285.6**

(22) Anmeldetag: **12.10.84**

(51) Int. Cl.⁴: **F 16 H 19/00**
**// G01B5/06**

(43) Veröffentlichungstag der Anmeldung: **16.04.86**
**Patentblatt 86/16**

(84) Benannte Vertragsstaaten: **AT CH DE FR GB IT LI SE**

(71) Anmelder: **Hommelwerke GmbH,**
**D-7730 VS-Schwenningen (DE)**

(72) Erfinder: **Die Erfinder haben auf ihre Nennung verzichtet**

(74) Vertreter: **Leine, Sigurd, Dipl.-Ing. et al, LEINE & KÖNIG**
**Patentanwälte Burckhardtstrasse 1,**
**D-3000 Hannover 1 (DE)**

(54) **Verstelleinrichtung, insbesondere Messständer.**

(57) Eine Verstelleinrichtung, insbesondere ein Meßständer, weist eine drehbar und axial unbeweglich gehaltene Spindel (3) auf, auf der eine drehfest und axial bewegliche Mutter (7) angeordnet ist, die über Übertragungsmittel mit der Spindel in Wirkungsverbindung steht und sich bei Drehung der Spindel axial bewegt. Die Übertragungsmittel sind drei auf einer zylindrischen Außenfläche der Spindel angeordnete Kugellager (16, 17, 18) die axial im Abstand zueinander angeordnet sind und deren Achsen in einer im wesentlichen gemeinsamen Radialebene zur Achse der Spindel in gleichem Maße geneigt sind. Dabei ist die Neigung der Achse des mittleren Kugellagers (17) gegensinnig zu der Achse der beiden äußeren Kugellager. Der Innendurchmesser der Innenringe der Kugellager ist etwas größer als der Durchmesser der zylindrischen Außenfläche der Spindel. Die Achse des mittleren Kugellagers ist senkrecht zu der im wesentlichen gemeinsamen Radialebene zu den Achsen der äußeren Kugellager versetzt, so daß die Spindel radial zwischen den Innenringen der Kugellager eingespannt ist. Die Verstelleinrichtung arbeitet spielfrei, insbesondere frei von Umkehrspiel und Hysterese. Die Steigung der Verstellung ist beliebig wählbar, insbesondere sehr klein, so daß ein unmittelbarer Antrieb der Spindel durch einen Motor ohne Zwischengetriebe möglich ist. Selbsthemmung ist möglich. Die Gesamtreibung ist gering.

0177635

# LEINE & KÖNIG

**PATENTANWÄLTE**

Dipl.-Ing. Sigurd Leine · Dipl.-Phys. Dr. Norbert König

Burckhardtstraße 1          Telefon (05 11) 62 30 05
D-3000 Hannover 1

Unser Zeichen          Datum

Hommelwerke GmbH          820/91 EP    14. September 1984


### Verstelleinrichtung, insbesondere Meßständer

Die Erfindung betrifft eine Verstelleinrichtung, insbesondere einen Meßständer, der im Oberbegriff des Patentanspruchs 1 genannten Art.

Es sind Meßständer für Meßzwecke bekannt, die eine vertikale Säule aufweisen, an der ein Ausleger in unterschiedlichen Höhen festklemmbar ist, an dem ein Längenmeßtaster befestigt werden kann, der mit seinem Stößel nach unten auf ein Werkstück auftastet, das auf einem Meßtisch liegt.

Der Ausleger kann horizontal geschwenkt und vertikal so verfahren werden, daß der Meßtaster beliebige Orte über dem Meßtisch einnimmt. Von besonderer Bedeutung ist dabei die vertikale Einstellung in Säulenrichtung. Einfachere bekannte Meßständer erfordern eine vertikale Verschiebung des Auslegers von Hand nach Lösen der Klemmvorrichtung. Die Verstellung ist dabei ungenau, und bestimmte Stellungen können weder angefahren noch reproduziert werden.

Es sind auch Ständer bekannt, bei dem die Verstellung mittels einer Spindel oder einer Zahnstange erfolgt, die den Ausleger auf der Säule bewegt und hält. Wegen der Reibung der Führung zwischen Ausleger und Säule ergibt sich in Verbindung mit unvermeidlichem Spiel in dieser Führung ein Umkehrspiel und damit eine Hysterese in der Einstellung, so daß ein exaktes Einfahren des Auslegers auf bestimmte Höhen von verschiedenen Richtungen her unmöglich ist. Die Verwendung einer Spindel oder einer Zahnstange zusätzlich zu der hochgenauen Führung

SL/K

für den Ausleger stellt dabei einen beträchtlichen Aufwand dar.

Zur Verringerung dieses Nachteils ist ein Meßständer bekannt, dessen Verstelleinrichtung zentral zwischen Führungsbahnen des Ständers angeordnet ist, so daß bei Umkehrung der Verstellrichtung unkontrollierbare Kippbewegungen des Auslegers vermieden werden. Dies ist aber nur möglich, wenn ein offenes Profil, z.B. ein U-Profil, als Querschnitt für den Ständer verwendet wird und der Vortrieb zentral zwischen den Führungsbahnen angeordnet ist. Um die erforderliche Steifigkeit zu erreichen, muß dann ein entsprechend schwerer stabiler Querschnitt des U-Profils verwendet werden, der die Kräfte des Auslegers ohne größere Verformung des Stativkörpers aufnehmen kann.

Der Erfindung liegt die Aufgabe zugrunde, eine Verstelleinrichtung, insbesondere einen Meßständer, der betreffenden Art zu schaffen, die die Nachteile der bekannten Verstelleinrichtungen für Meßständer nicht aufweist, also einfach im Aufbau ist, eine hohe Führungsgenauigkeit hat und insbesondere kein Umkehrspiel bei Umkehrung der Verstellrichtung aufweist.

Diese Aufgabe wird durch die im Kennzeichen des Anspruchs 1 angegebene Lehre gelöst.

Bei der erfindungsgemäßen Lösung sind die Führungsmittel für die Mutter und eines gegebenenfalls daran angebrachten Auslegers mit den Verstellmitteln identisch, so daß durch die Verstellkräfte keine Drehmomente auftreten, die ein Umkehrspiel zur Folge haben könnten. Die Neigung der Achsen der Kugellager kann beliebig gewählt werden, so daß auch die Steigung, also das Verhältnis von Umdrehung der Spindel zu axialer Verstellung der Mutter, beliebig, insbesondere beliebig klein gewählt werden kann. Die zylindrische Spindel läßt sich in einfacher Weise herstellen, und die Kugellager sind Serienteile, so daß sich insgesamt eine außerordentlich billige und einfache Konstruktion ergibt.

Es sind kleinste Steigungswerte durch entsprechende Bemessung der Neigungen der Achsen der Kugellager erzielbar, so daß ein Antriebsmotor ohne Untersetzungsgetriebe direkt an die Spindel ankoppelbar ist. Die geringe Steigung ermöglicht auch eine Selbsthemmung. Trotzdem ist insgesamt die Führung und der Vorschub leichtgängig. Der direkte und reibungsarme Antrieb ermöglicht einen besonders einfachen Unfallschutz und eine flinke Motorabschaltung bei Gefahr.

Zur Erzielung eindeutiger Auflageverhältnisse ist es zweckmäßig, daß die auf der zylindrischen Spindel aufliegenden Innenflächen der Innenringe der Kugellager ballig oder kantenförmig ausgebildet sind. Auf diese Weise sind die Laufbahnen weitgehend linienförmig.

Nach einer Weiterbildung der Erfindung weicht der Absolutwert des Neigungswinkels der Achse des inneren Kugellagers von dem der äußeren Kugellager geringfügig ab. Dadurch wird eine Klemmwirkung in Axialrichtung und eine Vergrößerung der Hemmung erzielt.

Die Neigung der Achsen der Kugellager kann einstellbar sein, um so eine Grob- oder Feineinstellung zu ermöglichen.

Die Spindel wird durch den seitlichen Versatz der Achsen senkrecht zur Neigungsebene der Achsen klemmend in Axialrichtung gehalten. Gemäß einer Weiterbildung der Erfindung ist dieser Versatz einstellbar, derart, daß die Klemmung aufhebbar und damit die Mutter auf der Spindel in Axialrichtung verschiebbar ist.

Eine andere Weiterbildung der Erfindung ist in Anspruch 6 angegeben. Durch diese Lehre wird eine Verdopplung der Hubkraft erzielt, während die Rollenmuttern gegenseitig gleichzeitig als Verdrehsicherung dienen.

Insbesondere bei geringer Steigung der Verstelleinrichtung ist der Antrieb durch einen Elektromotor zweckmäßig, wobei gemäß einer Weiterbildung der Erfindung ein Überstromschalter vorgesehen ist, der bei Anfahren der Endstellungen der Mutter den damit verbundenen Stromanstieg zum Abschalten des Motors benutzt.

Anhand der Zeichnung soll die Erfindung näher erläutert werden.

Fig. 1 zeigt in Seitenansicht und teilweise geschnitten einen Meßständer mit einer Verstelleinrichtung gemäß einem Ausführungsbeispiel der Erfindung,

Fig. 2 zeigt schematisch die Halterung der Spindel
von den Kugellagern und

Fig. 3 ist eine radiale Seitenansicht der Fig. 2
mit zusätzlicher Darstellung der Kugeln und
des Gehäuses der Mutter.

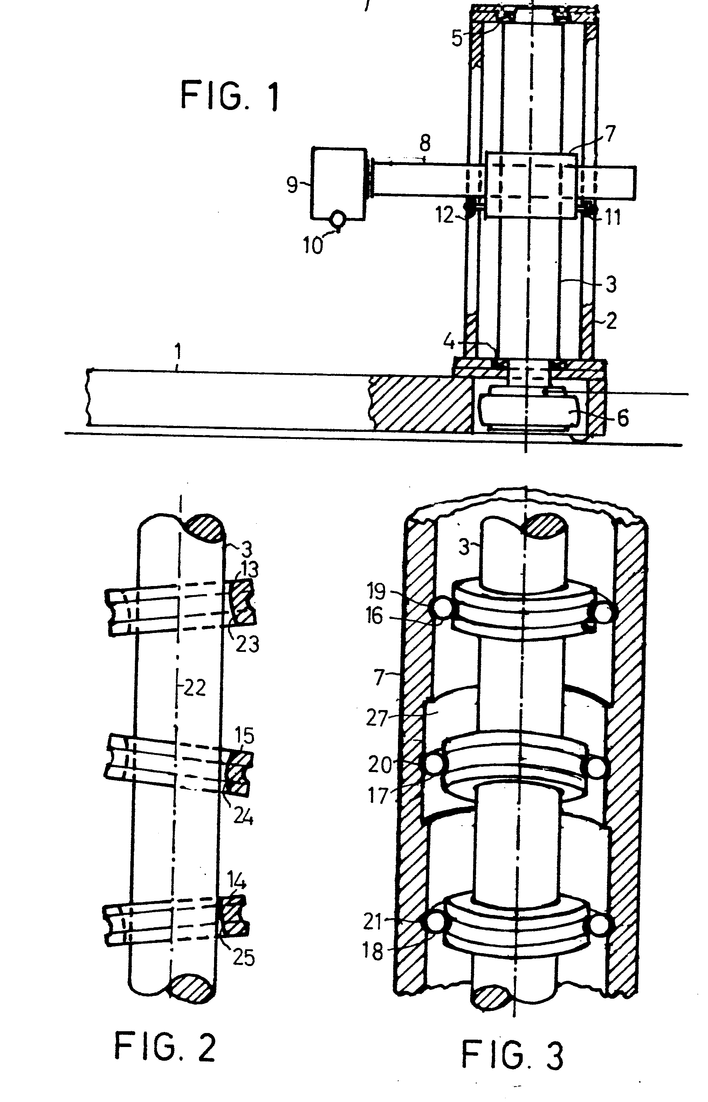

In Fig. 1 ist von einem Fuß 1 ein Gehäuse 2 in vertikaler Richtung gehalten,in dem eine Spindel 3 mit zylindrischer
Außenfläche durch Lager 4 und 5 drehbar und in axialer Richtung unbeweglich gelagert ist. Das untere Ende der Spindel 3
ist mit einem Elektromotor 6 verbunden.

Von der Spindel 2 ist eine Mutter 7 gehalten, an der
sich ein Ausleger 8 befindet, der an seinem Ende einen Meßtaster 9 hält, an dem sich ein Meßstößel 10 zur Abtastung von
Werkstücken befindet. Die Mutter 7 ist durch Führungsrollen
11 und 12 gegen Verdrehung gesichert.

Fig. 2 zeigt in Einzeldarstellung zur Verdeutlichung
der Wirkungsweise der erfindungsgemäßen Verstelleinrichtung
die Spindel 3 und Innenringe 13, 14 und 15 von Kugellagern,
deren Außenringe durch die im wesentlichen hülsenförmigen
Mutter 7 gebildet ist, wie das in Fig. 3 gezeigt ist. Kugeln
16, 17 und 18 laufen in entsprechenden Rillen 19, 20 und 21
in der Innenwandung der Mutter 7.

Fig. 2 zeigt, daß die Innenringe 13, 14 und 15 der
Kugellager in einer gemeinsamen Radialebene, das ist die
Zeichnungsebene, zu einer Achse 22 der Spindel 3 geneigt sind,
und zwar die Innenringe 13 und 14 gleichsinnig und in gleichem
Maße zur einen Seite hin und der Innenring 15 in gleichem
Maße in der entgegengesetzten Richtung. Innenflächen 23, 24
und 25 der Innenringe 13, 14 und 15 sind ballig ausgebildet
und haben, wie das aus der Zeichnung ersichtlich ist, einen
Durchmesser, der größer ist als der Außendurchmesser der
Spindel 3. In der Richtung senkrecht zur genannten Radialebene,
das ist die Papierebene in Fig. 2, sind die Achsen des
mittleren Kugellagers mit dem Innenring 15 zu denen der äußeren Kugellager mit den Innenringen 13 und 14 versetzt. Diese Versetzrichtung ist die Papierebene in Fig. 3. Der Versatz kommt dadurch zustande, daß die Rille 20 für die Kugeln 17 sich in einer seitlich in der Zeichnung nach links exzentrisch versetzten zylindrischen Innenfläche 27 der Mutter 7 befindet. Dadurch drückt das mittlere Kugellager mit seinem Innenring 15 die Spindel 3 in der Fig. 3 nach links, während die Innenringe 13 und 15 das Gegenlager bilden und die Spindel 3 nach rechts drücken. Auf diese Weise ist die Spindel 3 in der Fig. 3 seitlich eingeklemmt und damit auch reibschlüssig in Axialrichtung gehalten.

Durch Drehung der Spindel 3 mittels des Elektromotors 6 bewegen sich die balligen Innenflächen 23, 24 und 25 wendelförmig auf der zylindrischen Außenfläche der Spindel 3, so daß sich insgesamt die Mutter in Spindelrichtung bewegt. Da das mittlere Kugellager mit dem Innenring 15 auf einer zu den Innenflächen 23 und 25 entgegengesetzten Seite an der Spindel 3 anliegt, ergibt sich die Neigung des Innenringes 15 bzw. des zugehörigen Kugellagers gegensinnig zu den beiden äußeren Kugellagern.

**LEINE & KÖNIG**

PATENTANWÄLTE

Dipl.-Ing. Sigurd Leine · Dipl.-Phys. Dr. Norbert König

Burckhardtstraße 1          Telefon (05 11) 62 30 05
D-3000 Hannover 1

Hommelwerke GmbH

Unser Zeichen          Datum

820/91 EP   14. September 19

P a t e n t a n s p r ü c h e :

1. Verstelleinrichtung, insbesondere Meßständer, mit einer drehbar und axial unbeweglich gelagerten Spindel, auf der eine drehfest und axial bewegliche Mutter angeordnet ist, die über Übertragungsmittel mit der Spindel in Wirkverbindung steht und sich bei Drehung der Spindel axial bewegt, d a - d u r c h   g e k e n n z e i c h n e t, daß die Übertragungs- mittel drei auf einer zylindrischen Außenfläche der Spindel angeordnete Kugellager (13, 16, 19; 14, 18, 21; 15, 17, 20) aufweisen, die axial im Abstand zueinander angeordnet sind, deren Achsen in einer im wesentlichen gemeinsamen Radialebene (Fig. 2) zur Achse (22) der Spindel (3) in gleichem Maße geneigt sind, wobei die Neigung der Achse des mittleren Kugellagers (15, 17, 20) gegensinnig zu der der Achse der beiden äußeren Kugellager (13, 16, 19; 14, 18, 21) ist, daß der Innendurchmesser der Innenringe (13, 14, 15) der Kugellager etwas größer als der Durchmesser der zylindrischen Außenfläche der Spindel (3) ist und daß die Achse des mittleren Kugellagers (15, 17, 20) senkrecht zu der im wesentlichen gemeinsamen Radialebene (Fig. 2) zu den Achsen der äußeren Kugellager (13, 16, 19; 14, 18, 21) versetzt ist und so die Spindel (3) radial zwischen den Innenringen (13, 14, 15) der Kugellager eingespannt ist.

2. Verstelleinrichtung nach Anspruch 1, d a d u r c h   g e - k e n n z e i c h n e t, daß die auf der zylindrischen

SL/K

Spindel (3) aufliegenden Innenflächen (23, 24, 25) der Innenringe (13, 14, 15) der Kugellager ballig oder kantenförmig
ausgebildet sind.

3. Verstelleinrichtung nach Anspruch 1, d a d u r c h   g e -
k e n n z e i c h n e t ,  daß der Absolutwert des Neigungswinkels der Achse des inneren Kugellagers (15, 17, 20) von dem
der äußeren Kugellager (13, 16, 19; 14, 18, 21) geringfügig
abweicht.

4. Verstelleinrichtung nach Anspruch 1, d a d u r c h   g e -
k e n n z e i c h n e t ,  daß die Neigung der Achsen der Kugellager verstellbar ist.

5. Verstelleinrichtung nach Anspruch 1, d a d u r c h   g e -
k e n n z e i c h n e t ,  daß der Versatz der Achsen der Kugellager senkrecht zu der im wesentlichen gemeinsamen Radialebene
(Fig. 2) einstellbar ist, derart, daß die Kugellager und damit
die Mutter (7) in Axialrichtung der Spindel (3) verschiebbar
oder reibschlüssig gehalten sind.

6. Verstelleinrichtung nach Anspruch 1, d a d u r c h   g e -
k e n n z e i c h n e t ,  daß zwei identische Verstelleinrichtungen im Abstand nebeneinander angeordnet sind, deren Spindel
parallel zueinander verlaufen und mittels eines gemeinsamen
Antriebs gleichmäßig und gleichsinnig drehbar sind, und daß
die Muttern der beiden Verstelleinrichtungen über eine Traverse
miteinander verbunden sind.

7. Verstelleinrichtung nach Anspruch 1, d a d u r c h   g e -
k e n n z e i c h n e t ,  daß die Neigung der Achsen der Kugellager so gering ist, daß Selbsthemmung eintritt.

8. Verstelleinrichtung nach Anspruch 1, d a d u r c h   g e -
k e n n z e i c h n e t ,  daß die Spindel (3) durch einen Elektromotor (6) angetrieben ist, dem ein Überstromschalter vorgeschaltet ist, der bei Anfahren der Endstellungen der Mutter (7)
den Motor abschaltet.

FIG. 1

0177635

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 040 486 (MARLDON) <br><br> * Seiten 1-4; Figuren 1-3 * | 1,2,4, 5 | F 16 H 19/00 //<br>G 01 B 5/06 |
| X | DE-B-1 210 647 (J. UHING) <br> * Insgesamt * | 1,2 | |
| A | DE-B-1 201 647 | 3,7 | |
| A | DE-B-1 203 079 (J. UHING) <br> * Figuren 1-6 * | 1,8 | |
| A | DE-B-1 216 058 (C.B. STRANDGREN) <br> * Ansprüche; Figuren 1-11 * | 1-4 | |
| A | DE-A-2 709 006 (J. UHING) | | RECHERCHIERTE SACHGEBIETE (Int. Cl.4) |
| A | US-A-3 289 310 (D.R. STONE) | | F 16 H <br> G 01 B |

Der vorliegende Recherchenbericht wurde für alle Patentansprüche erstellt.

| Recherchenort <br> DEN HAAG | Abschlußdatum der Recherche <br> 07-06-1985 | Prüfer <br> VOGT-SCHILB G.J.F. |
|---|---|---|

EPA Form 1503 03 82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument